# EUROPEAN PATENT SPECIFICATION

(11) **EP 1 514 444 B1**
(45) Date of publication and mention of the grant of the patent: **06.05.2009**
(21) Application number: 03730198.3
(22) Date of filing: 07.05.2003
(51) Int. Cl.: H04W 12/08

(54) **WIRELESS COMMUNICATION SYSTEM, APPARATUS AND METHOD**
FUNKKOMMUNIKATIONSSYSTEM, GERÄT UND VERFAHREN
SYSTEME DE COMMUNICATION SANS FIL, APPAREIL ET PROCEDE ASSOCIES

(30) Priority: 01.06.2002 GB 0212840
(43) Date of publication of application: 16.03.2005
(73) Proprietor: MOTOROLA INC., Schaumburg, IL 60196 (US); Motorola Limited, Basingstoke, Hampshire RG22 4PD (GB)
(72) Inventor: SHAHAF, Mark, 77642 Ashdod (IL); SERFATY, Salomon, 60951 Doar Gaash (IL); GLAZER, Nimrod, 60691 Rehovot (IL)
(74) Representative: McCormack, Derek James
(86) International application number: PCT/EP2003/050147
(87) International publication number: WO 2003/103322

(56) References cited:
- EP-A- 0 996 303
- US-A- 5 559 886
- US-A1- 2002 052 200

## Description

### Field of the Invention

This invention relates to a wireless communication system, and apparatus and a method for use in such a system. In particular, it relates to obtaining valid identification data in a wireless communication network. The invention is applicable to, but not limited to, a procedure for obtaining valid network identification data, in order to prevent fraudulent networks or fraudulent base stations disrupting communications.

### Background of the Invention

Wireless communication systems, for example cellular or trunked telephony or private mobile radio communication systems, typically provide for radio telecommunication links to be arranged between a network infrastructure including a plurality of base transceiver stations (BTSs) and a plurality of subscriber units, often termed mobile stations, (MSs) and between mobile stations via the infrastructure. The term `MS' generally includes both hand-portable and vehicular mounted terminals capable of wireless communication of user information, e.g. one or more of speech, data, picture or video information, by radio. Thus, in the context of the present invention, the term 'MS' is used to encompass any remote wireless communication unit, such as a pager, cellular phone, personal digital assistant (PDA), mobile radio, portable or mobile telephone, or mobile data terminal requiring a wireless link in order to communicate.

In a wireless communication system, each BTS has associated with it a particular geographical coverage area (or cell). The coverage area defines a particular range that the BTS can maintain acceptable communications with MSs operating within its serving cell. Often these cells combine to produce an expanded system coverage area.

Multiple access techniques permit simultaneous transmissions from several MSs to a single BTS over a plurality of communications channels. Some channels are used for carrying traffic communications, whilst other channels (which may be logical or dedicated channels) are used for transferring control information, such as call paging, between the base transceiver stations and subscriber units. Examples of multiple access techniques include: frequency division multiple access (FDMA), time division multiplexing/ multiple access (TDM, TDMA) and code division multiple access (CDMA).

In the field of this invention, it is known that wireless cell-based telecommunication systems employ authorised access and access security protocols, designed for wireless environments, which are shared by many users and systems. In contrast to a wireline communication system, where access to a communication resource (channel) is via a physically connected node, a wireless resource is available to any appropriately configured communication equipment implementing physical layer communication functionality.

It is known that a MS needs to access a valid communication network and that the MS has to be permitted to access the network. The present inventors have appreciated a problem relating to such network access, which is particularly severe in cellular networks due to their widespread coverage and rapidly growing population of systems, users, services and applications.

The infrastructures of cellular systems use their so-called broadcast channels monitored by all MS to inform all potential users of the network-specific parameters. For example, in a Global System for Mobile (GSM) communication system the Broadcast Control CHannel (BCCH) continually broadcasts on the downlink specific system information, including: base station identity, frequency allocations, frequency-hopping sequences, system timing, mobile network identifier, known as a combination of the mobile country code and mobile network code (MNI), etc. In GSM systems the MNI determines whether a cellular subscriber unit is able to access a particular network.

However, the inventors have recognised that such wireless systems are inefficient in supporting protocols to enable network validation. As most cellular standards are driven by commercial market requirements, there exists a significant risk that an unauthorized or 'cloned' transmitting terminal purporting to be a base transceiver station could be established to `capture' communications by the MSs of the system and thereby influence access to the correct wireless network.

In particular, from the moment an MS has been 'captured' by the fraudulent network, the user may be either blocked or provided with a false service, thereby making him/her vulnerable to receiving misleading information, etc.

A further problem recognised by the inventors of the present invention relates to known enhanced authentication procedures that enable MSs to validate the network as being legitimate. This enhancement mechanism has the disadvantage that it requires a MS firstly to access and camp on the target cell, which may include a fraudulent BTS, and perform the signalling exchange comprising the authentication procedure. This will eventually result in the MS leaving the legitimate network to communicate on the fraudulent network. Although, the known authentication procedure may identify the BTS/network as fraudulent, such identification is likely to require a significant period of time in which the user is unable to access a desired communication resource/service. This is unacceptable for mission-critical users such as public safety and governmental organisations.

A further disadvantage of known authentication procedures is that they are limited to trunked radio communication systems. The procedure of network authentication does not exist in the widely deployed commercial systems such as GSM, CDMA 2000, and future 3^{rd} generation cellular communication systems (3G). The introduction of authentication functionality into these systems would require significant modifications to the air interface specifications as well as a major impact on the system components.

Thus, there currently exists a need to provide an improved communication system, a communication unit and method for obtaining network identification data in a wireless communication system, wherein the abovementioned disadvantages may be alleviated.

US-A-5,559,886 describes a method of operation in a mobile communication system in which a base station and a mobile station carry out a mutual authentication check.

EP-A-996,303 describes a method of detecting eavesdropping in a call between a mobile telephone and a base station by a device which purports to be a mobile telephone and forwards the call to another base station.

US 2002/052200 describes a method of forming a secure connection between two networks which involves sending an encrypted parameter from one network to the other.

### Summary of the Invention

In accordance with a first aspect of the present invention, there is provided a wireless communication system as defined in claim 1 of the accompanying claims.

In accordance with a second aspect of the present invention, there is provided a wireless serving communication terminal, e.g. a base transceiver station, operable in the system according to the first aspect described above. The serving terminal is defined in claim 10 of the accompanying claims.

In accordance with a third aspect of the present invention, there is provided a wireless communication terminal, e.g. a mobile station, operable as the remote terminal as described above. The terminal is defined in claim 12 of the accompanying claims.

In accordance with a fourth aspect of the present invention, there is provided a method as defined in claim 18 of the accompanying claims.

Further features of the invention are defined in the accompanying claims.

In summary, the inventors of the present invention have recognised that a fraudulent infrastructure or a fraudulent transmitting station may be set up to attract wireless subscriber units away from their desired network. Therefore, one aspect of the present invention introduces an encryption/decryption procedure to encrypt/decrypt network or infrastructure identification data to minimise the risks associated with such fraudulent network or fraudulent transmitter activity.

The invention eliminates the possibility of a mobile station camping on a transmitting station which is a false station. By having the data identifying each valid base transceiver station encrypted, preferably dynamically encrypted, e.g. through the use of time, geographical information, frame or multiframe, etc., the mobile station can detect from the received signal that the appropriate encrypted identity data is not included in the signal, and that the transmitting station is a false one. This procedure is beneficial when the mobile station is undertaking a cell selection or reselection procedure. In such a procedure, the mobile station may scan neighbouring transmitting stations to select possible candidates as serving base transceiver stations. The mobile station may for example measure one or more parameters of a signal received from each candidate serving station, e.g. the received signal strength and/or quality, as known in the art, and thereby form a list of the selected stations in preference order. If a transmitting station is determined by the mobile station to be false, by not including its encrypted identity information in the signal transmitted by it, it can be rejected from the list of possibilities included in the list of preferred candidate serving base stations before any two way communications are established.

This cell selection or re-selection procedure taking advantage of the invention is especially important in mission critical applications where camping onto a false transmitting station and then further determining that the base station is false may cause a waste of precious time. Thus, the invention beneficially allows detection of a transmitting station to be false to be made before the mobile station camps on the transmitting station and thereby saves valuable operational time.

When it has been determined that a base station is not a false one and when a mobile station has then camped onto that base station, then other challenge/response authentication measures as are known in the prior art may be undertaken.

GB-A-2297016A, WO-A-01/91503 and WO-A-00/35223A1 describe procedures for authentication of the user of a mobile station by the system infrastructure. These procedures are carried out when the user is already camped on the base station. This is in contrast to the invention in which the user of a mobile station is able initially to identify that a base station is a valid base station, and not a fraudulent one. In WO-A-00/35223 a mutual authentication procedure is proposed. For this, every user would need to authenticate himself and to authenticate the base station using one-to-one challenge/response transmissions.

EP-A-1005244 describes a procedure which prevents a user's mobile station from transmitting data to a false base-station or network, by using a challenge/response procedure that involves a trusted third party. However, this procedure is to be carried out when the mobile station has already camped on that particular base-station.

Exemplary embodiments of the present invention will now be described, with reference to the accompanying drawings, in which:

### Brief Description of the Drawings

FIG. 1 is a schematic block diagram of a trunked radio communication system that can be adapted to support the various inventive concepts of an embodiment of the present invention;
FIG. 2 is a schematic block diagram of a wireless communication unit adapted to support the various inventive concepts of an embodiment of the present invention; and
FIG. 3 shows an encryptographic/ decryptogaphic configuration adapted to support the various inventive concepts of an embodiment of the present invention.

### Detailed description of embodiments of the invention

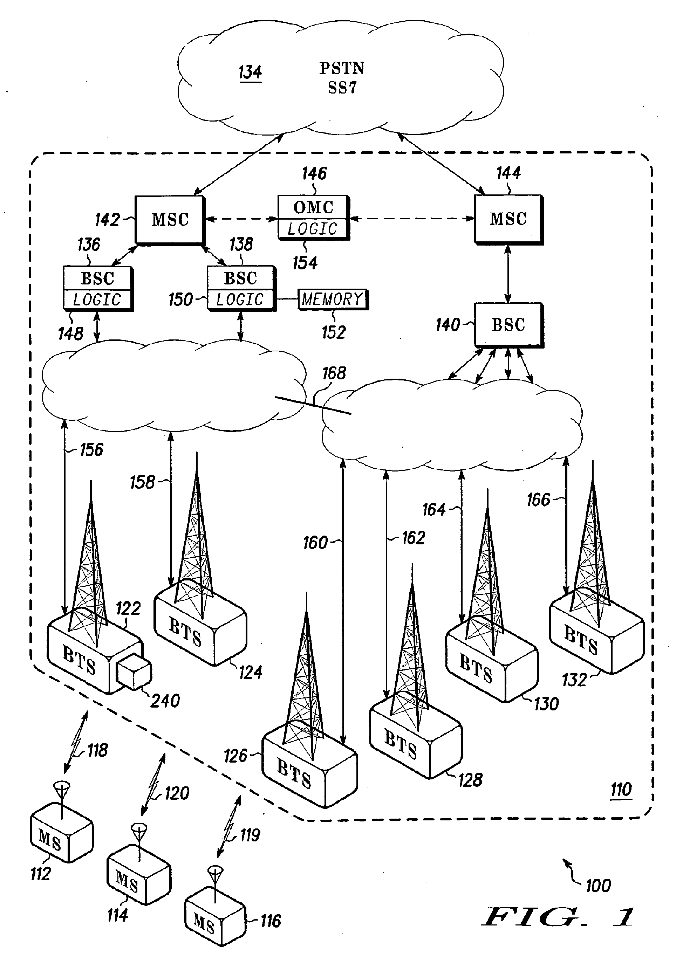

FIG. 1 shows, in outline, a trunked radio communications system 100 supporting a TErrestrial Trunked RAdio (TETRA) air-interface in accordance with a preferred embodiment of the invention. The European Telecommunications Standards Institute (ETSI) has defined the TETRA air interface. Generally, the air-interface protocol is administered from base sites that are geographically spaced apart - one base site supporting a cell or sectors of a cell.

A plurality of subscriber units, such as a plurality of MSs 112-116 and fixed terminals (not shown), communicate over a selected air-interface 118-120 with a plurality of serving base transceiver stations (BTS) 122-132. The BTSs 122-132 may be connected to a conventional public-switched telephone network (PSTN) 134 through base station controllers (BSCs) 136-140 and mobile switching centres (MSCs) 142-144. Each BTS 122-132 is principally designed to serve its primary cell, with each BTS 122-132 containing one or more transceivers.

Each BSC 136-140 may control one or more BTSs 122-132, with BSCs 136-140 generally interconnected through MSCs 142-144. Each BSC 136-140 is therefore able to communicate with one another, if desired, to pass system administration information therebetween, with BSCs responsible for establishing and maintaining control channel and traffic channels to serviceable MSs affiliated therewith. The interconnection of BSCs therefore allows the trunked radio communication system to support handover of the MSs between cells.

Each MSC 142-144 provides a gateway to the PSTN 134, with MSCs interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory element 154 (shown only in relation to BSC 138 for the sake of clarity).

The memory element 154 typically stores historically compiled operational data as well as in-call data, system information and control algorithms.

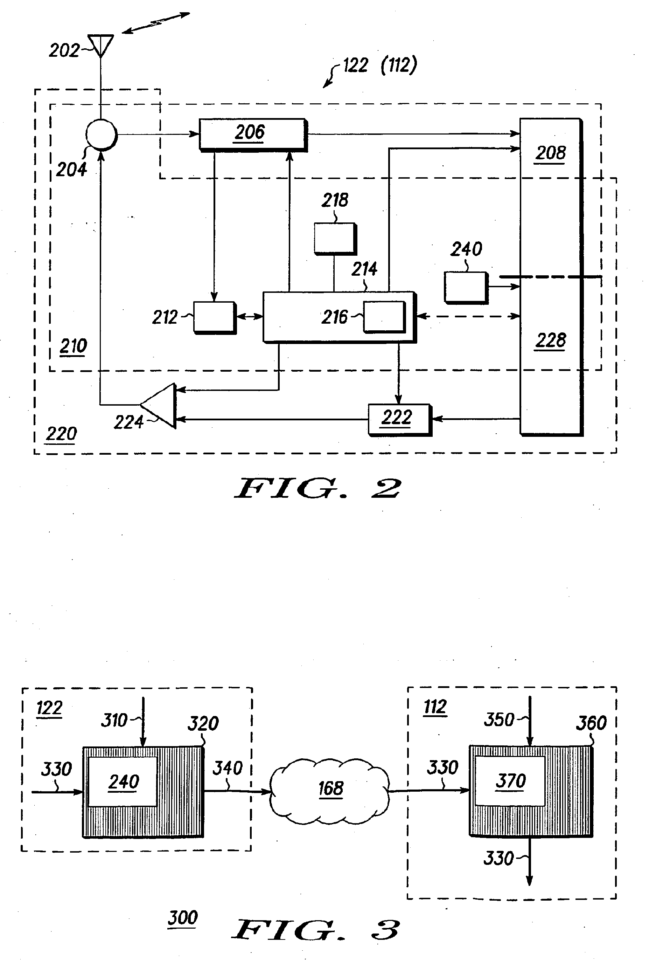

In the context of the present invention, one or more BTS(s) 122-132 have been adapted to implement the inventive concepts hereinafter described. The one or more BTS(s) 122-132 include a cryptographic function arranged to apply encryption to network identification data to be broadcast from the BTS, as described with respect to FIG. 3.

It is within the contemplation of the invention that one or more MSC 142-144 or BSC 136-140 may also be adapted to perform the encryption process, such that encrypted network identification data is provided to the respective BTS(s). This alternative embodiment is in contrast to the preferred embodiment where the BTS(s) encrypt the network identification data.

By encrypting the network identification data, a fraudulent BTS that appears on the system will transmit unencrypted, or falsely encrypted network identification data. In such a scenario, a receiving MS is able to easily determine that the transmitting BTS is a fraudulent BTS, or supporting a fraudulent network. As a consequence, the MS will not register with the fraudulent BTS.

Turning now to FIG. 2, a block diagram of a wireless communication unit, for example BTS 122, is shown, where the BTS 122 is adapted to support preferred embodiments of the present invention. For the sake of clarity, the BTS 122 is shown as divided into two distinct portions - a receiver portion 210 and a transmit portion 220.

The BTS 122 includes an antenna 202 preferably coupled to an antenna switch 204 that provides signal control of radio frequency (RF) signals in the BTS 122, as well as isolation between receiver chain 210 and transmit chain 220. Clearly, the antenna switch 204 could.be replaced with a duplex filter or circulator, as known to those skilled in the art.

The receiver chain 210 further includes scanning receiver front-end circuitry 206 (effectively providing reception, filtering and intermediate or base-band frequency conversion). The scanning front-end circuit 206 scans for signal transmissions from a MS wishing to communicate with the BTS 122 or a MS wishing to communicate with another MS via BTS 122. The scanning front-end circuit 206 is serially coupled to a signal processor 208 (generally realised by at least one digital signal processor (DSP)).

A controller 214 is operably coupled to the scanning front-end circuitry 206 so that the receiver can calculate receive bit-error-rate (BER) or frame-error-rate (FER) or similar link-quality measurement data from recovered information via a received signal strength indication (RSSI) function 212. The RSSI function 212 is operably coupled to the scanning front-end circuitry 206.

The memory device 216 stores a wide array of data and programs, such as decoding/encoding functions and the like, as well as link quality measurement information to enable an optimal communication link to be selected. In accordance with one embodiment of the present invention, the memory device 216 also stores cryptographic data and/or one or more cryptographic keys.

A timer 218 is operably coupled to the controller 214 to control the timing of operations, namely the transmission or reception of time-dependent signals, within the BTS 122.

As regards the transmit chain 220, this essentially includes a processor 228 (which may be the same processor as the processor 208) transmitter/ modulation circuitry 222 and a power amplifier 224. The processor 228, transmitter/modulation circuitry 222 and the power amplifier 224 are operationally responsive to the controller 214, with an output from the power amplifier coupled to the antenna switch 204, as known in the art.

In accordance with a preferred embodiment of the invention, the controller 214 or the signal processor 228 (each in practice may be one or more programmed microprocessors) has been adapted to encrypt one or more network or BTS specific messages or data, such as the MNI.

Alternatively, it is envisaged that a separate cryptographic function 240 may be provided, operably coupled to the processor 228 (as shown in FIG. 2) or the controller 214 as appropriate, to perform the encryption process. The cryptographic data and/or keys may be provided by the cryptographic function 240 or provided to the cryptographic function 240 for encrypting a network identifier.

The BTS transmitter then transmits an encrypted network identifier to its remote wireless communication units operating within its coverage range. Notably, this transmission is distinguished over the current known mechanism of transmitting an unencrypted identifier.

A skilled artisan will appreciate that substantially the same configuration of elements will be found in the MS 112, albeit with lower performance, reduced power, bandwidth constraints, battery power consumption considerations, etc.

In accordance with a preferred embodiment of the invention, the MS 112 may comprise a transceiver having a similar construction to the BTS 122 shown in FIG.2. In particular, the MS 112 may include a processor similar to the processor of the BTS 122 (again in practice one or more programmed microprocessors) has similarly been adapted to decrypt one or more network or BTS specific messages or data, such as the MNI. Alternatively, it is envisaged that a separate cryptographic function may be provided in the MS 112, operably coupled to the processor to perform the decryption process. Again, cryptographic data and/or keys may be provided by a cryptographic function or provided to the cryptographic function for decrypting a network identifier.

The MS receiver thus receives the message broadcast by the BTS 122, which includes one or more encrypted network identifiers, to determine whether the BTS is a valid BTS or is supporting a valid network. The MA 112 may thus have a processor which carries out the required decryption and BTS identity recognition functions similarly to the processor 228, the controller 214 or the cryptographic function 240 as appropriate in the BTS 122. The MS processor, e.g. similar to the controller 214, may also carry out a cell selection or re-selection procedure as described earlier wherein signals received from transmitters not including when decrypted an identity recognised by the processor are not included as preferred candidate BTSs in a list of preferred BTSs produced by the processor.

Advantageously, the inventive concepts of the present invention require minimal additional implementation complexity to air interface components. The preferred embodiment of the present invention preferably encrypts one or more of the broadcasted network identification parameters, e.g. Mobile Country Code (MCC), the Mobile Network Code (MNC) as specified within the GSM and TETRA standards. MNC and MCC are good examples as they determine in unique way the network identity.

Furthermore, the length of their combined codes shall be sufficient for crypto protection. It is envisaged that alternative embodiments may use alternative parameters, for example subscriber class (a type of subscribers that are legitimate on that network), or a location area parameter that can be used only within certain range of values. In summary, any parameters will suffice if it has the following characteristics:
(i) Provide sufficient unification of the network identity, and
(ii) The length of the data is sufficient for an adequate crypto protection process to be used, dependent upon the selected crypto algorithm.

Referring to FIG. 3, the encryption/decryption procedure 300 is illustrated in more detail. The controller 214, within the BTS 122, processes unencrypted network identification parameters 330 by a cryptographic function 320. The cryptographic (encryption processing) function 320 may be included within the BTS controller 214, or performed by a separate function 240 operably coupled to the BTS controller 214. Another input to the cryptographic function 320 is one or more cryptographic parameters 310, as known to those skilled in the art of encryption/decryption. This data preferably includes crypto key information required by a cryptographic algorithm run by function 320. The cryptographic (encryption/decryption) algorithm may be either a customised algorithm provided to a specific user or user class, or it may be based on one or more known algorithms, for example digitally encrypted signalling (DES) standard, or 3DES or a proprietary standard, etc. Processing of the network parameters 330 by cryptographic function 320 using the cryptographic data 310, results in an encrypted version of the network identification data 340.

The encrypted network identification data 340 is broadcast over the air interface 168, where it is received and processed by any MS 112 that acquires the network signal. The received encrypted network information 340 is applied within the MS 112 into a corresponding cryptographic function 360. The cryptographic function 360 may comprise a distinct element 370 operably coupled to a MS processor, e.g. corresponding to the BTS controller 214, or a cryptographic function performed by the MS processor. The cryptographic function 360 may be similar to, or different from, the cryptographic function 320 in the BTS 122, dependent upon the specific cryptographic technology being used. The aim of the cryptographic function 360 is to process and decrypt the received encrypted information 340. The decryption process uses the same crypto parameters 350, used in the BTS 122, in order to obtain the decrypted version of the network identification data 330.

Only MSs that are allowed/configured to access the network, i.e. pre-programmed with correct cryptographic parameters 350, have the ability to decrypt correctly the network identification data 340. Moreover, the network identification data 330 may only be recovered correctly if the data 330 has been encrypted, with the correct cryptographic parameters 310 at the BTS 122. The correct cryptographic parameters 310 are known only to approved BTS 122-132 operating on the real network.

Any attempt to construct a fraudulent transmitter, for example a fraudulent BTS to broadcast over the air interface, will result in a false or unencrypted network ID being transmitted by the BTS. Hence, a false or unencrypted network ID would be received by decryption function 360 in the MS 112 and the fraudulent BTS would in consequence be recognised as such.

Thus, the MSs will reject this fraudulent network without any attempt to register or communicate with the fraudulent BTS, e.g. in a cell selection or re-selection procdure.

In order to avoid such a fraudulent network capturing (recording) a broadcast of the real network and using the captured information within the fraudulent network, using a so-called "replay attack", the encryption algorithm may beneficially be dynamically (in contrast to statically) generated.

For example, the encryption algorithm operation may be made time-dependent. This can be achieved if the encryption/decryption algorithm in functions 320 and 360 are based on unique parameters, for example with reference to time and/or geographical location. One example is for the encryption/decryption algorithm to be made dependent upon the system time at any given instant, which is broadcast by the network. Alternatively, the encryption/decryption algorithm may, in the case of a Time Division Multiple Access (TDMA) system, be made dependent upon a number of particular slots/ frames/ multi-frames/ hyper-frames/ etc.

In a yet further alternative embodiment, in the case of a Code Division Multiple Access (CDMA) system, the encryption/decryption algorithm may be made dependent upon a particular code identification.

If geographical location information is used to dynamically change the crypto parameters, the cell identity, Location Area identity, and/or any other geographical-related information may be used. The dynamic generation of crypto parameters provides uniqueness in time and/or space to the encrypted network identification data and will help to further protect the cryptographic feature against replication of network identification data by the fraudulent network.

The various adapted components, within BTS 122 or MS 112, may be realised in discrete or integrated component form. More generally, the functionality associated with generating, administering and utilising an encryption/decryption process on network identification data, may be implemented in a respective communication unit (BTS 122, MS 112) in any suitable manner. For example, a new processor or cryptographic function may be added to a conventional communication unit, or alternatively an existing processor or cryptographic function of a conventional communication unit may be reprogrammed. As such, the required adaptation, for example the cryptographic algorithm used in the processor 208, may be implemented in the form of processor-implementable instructions stored on a storage medium, such as a floppy disk, hard disk, PROM, RAM or any combination of these or other storage multimedia.

Although the invention has been described in general with reference to the TETRA communication specification, utilising a TDMA access protocol, the inventive concepts contained herein are clearly suitable to alternative radio communication system technologies, such as GSM, UMTS 3GPP, GPRS, CDMA 2000, etc. operating similar or alternative access protocols.

Furthermore, the inventive concepts described herein do not require any specific negotiation between the network and the wireless communication (subscriber) unit. Therefore, there is no requirement for any new messages to be added to the existing air interface protocol. In addition, and advantageously, it does not expand (in its simplest implementation) the existing information. Thus, there is no requirement for any modification to the existing structure of the air protocol messages. The information that provides network identity exists in all modern cellular standards. Advantageously, the inventive concepts described herein propose to encrypt this data without expanding it, or adding additional information to enable it to fit into the existing structure.

A more complicated solution would be to provide additional information. This would require a far more complex implementation, where the actual identity fields will need to have certain values that indicate that the real information is securely delivered via a short data broadcast service. Such a facility is available in all modern cellular standards (GSM, CDMA, TDMA, 3GPP) and provides a capability to broadcast custom information. It is envisaged that some users/operators may employ the inventive concepts hereinbefore described to include additional protection information such as key-ID, crypto-algorithm-ID, crypto checksum, etc. as known in the art. Again, such a more complex solution would not require a radical change to the standard air interface and message structure, but it would require values being introduced in the network ID field of a standard message. Such a modified message would instruct subscribers to extract the information from a custom broadcast message.

It is also within the contemplation of the invention that alternative message formats, and/or associated data, can be accommodated.for within the inventive concepts described herein. The invention is therefore not to be considered as being limited to the encryption of the mobile network identifier (MNI). For example, other network or BTS specific messages may be encrypted, such that intended MSs are able to recover and decrypt the message to determine whether it was a valid transmission.

It will be understood that the wireless communication system, wireless communication units and method for obtaining network identification data, as described above, provides at least the following advantages:
(i) That little/no change is required to the communication standard's air interface, in order to minimise the risk posed by fraudulent BTS or fraudulent networks.
(ii) The encryption/decryption process is achieved by processing readily available and accessible information.
(iii) The wireless communication (subscriber) unit does not expose itself to the fraudulent network, namely the unit excludes the fraudulent network without making any transmission and without performing any negotiation. This ensures that security is maintained and no time is wasted.

Whilst specific, and preferred, implementations of the present invention are described above, it is clear that one skilled in the art could readily apply further variations and modifications of such inventive concepts.

Thus, a wireless communication system, a communication unit and method for obtaining network identification data have been provided that address the above-mentioned fraudulent BTS or fraudulent network problems.

## Claims

1. A wireless communication system (100) comprising:
a system infrastructure (142, 138, 122) including at least one serving wireless communication terminal (122);
and a plurality of remote wireless communication terminals (112, 114);
the at least one serving terminal (122) being adapted to serve a plurality of the remote terminals (112, 114) with a communication resource, the at least one wireless serving communication terminal (122) including:
a transmitter (220) for transmitting signals to at least one of the plurality of remote terminals; and
a processor (320) coupled to the transmitter (220) adapted to produce, for inclusion in a signal transmitted by the transmitter (220), identity data giving the identity of the serving terminal (122) and/or the identity of infrastructure (142, 138, 122) in which it is included;
and at least one of the remote communication terminals (112) including:
a receiver (210) for receiving signals transmitted from the at least one serving wireless communication terminal (122), and
a processor (360), coupled to the receiver (210) (220), adapted to obtain the identity data giving the identity of the serving terminal (122) and/or the identity of infrastructure (142,138,122);
**characterised in that** the processor (320) of the at least one serving terminal is adapted to produce the identity data in encrypted form (340) and the transmitter is adapted to transmit a signal including the encrypted identity data; the receiver (210) of the remote terminal (112) is adapted to receive the signal including the encrypted identity data and the processor (360) of the at least one remote terminal (112) is adapted to decrypt the encrypted identity data and to determine from the decrypted data that the serving terminal is a valid serving terminal and/or the infrastructure in which the serving terminal is included is a valid infrastructure.

2. A system (100) according to claim 1 and wherein the at least one remote terminal (112) is adapted to determine that a signal received from a transmitting terminal which does not include encrypted data giving the identity of the transmitting terminal is not from a valid serving terminal.

3. A system (100) according to claim 2, wherein the at least one remote terminal (112) is adapted, when it determines that the signal received from the transmitting terminal is not from a valid serving terminal, not to communicate further with the transmitting terminal.

4. A system (100) according to any one of the preceding claims wherein the or each serving terminal (122) comprises a base transceiver station and the or each remote communication terminal (112) comprises a mobile station and the base transceiver station and the mobile station are adapted to provide radio communication with one another.

5. A system (100) according to any one of the preceding claims, wherein the processors (320, 360) of the at least one serving terminal and of the at least one remote terminal in operation receive cryptographic data (310, 350) by a cryptographic function (240, 370) in order to encrypt or decrypt the identification data.

6. A system (100) according to claim 5, wherein the cryptographic data (310) includes key information for use in a cryptographic algorithm run by the processor (320).

7. A system (100) according to claim 6, wherein the cryptographic algorithm has been customised for a particular use, or is based on an encryption standard.

8. A system (100) according to claim 6 or claim 7, and wherein in operation the cryptographic algorithm is dynamically generated.

9. A system (100) according to claim 8 and wherein in operation the cryptographic algorithm is dynamically generated using one or more of the following:
(i) a plurality of particular time slots or time frames or multi-frames or hyper-frames, associated with a transmission on said wireless communication system;
(ii) a particular code identification;
(iii) geographical location information.

10. A wireless serving communication terminal (122) adapted to serve a plurality of remote terminals (112, 114) with a communication resource in a system (100) according to any one of the preceding claims, the wireless serving communication terminal (122) comprising:
a transmitter (220) for transmitting signals to at least one of the plurality of remote terminals; and
a processor (320) coupled to the transmitter (220) adapted to produce, for inclusion in a signal transmitted by the transmitter (220), identity data giving the identity of the serving terminal (122) and/or the identity of infrastructure (142,138,122) in which it is included; and **characterised in that** the processor is adapted to produce the identity data in encrypted form (340) and the transmitter (220) is adapted to transmit a signal including the encrypted identity data.

11. A serving terminal (122) according to claim 10 and which comprises a base transceiver station and wherein the at least one remote communication terminal (112) comprises a mobile station and the base transceiver station and the remote terminal are capable of radio communication with one another.

12. A wireless communication terminal (112) for use as a remote terminal in a system (100) according to any one of claims 1 to 9 and including:
a receiver (210) for receiving signals transmitted from the at least one serving wireless communication terminal (122), and
a processor (360), coupled to the receiver (210), adapted to obtain from a received signal the identity data giving the identity of the serving terminal (122) and/or the identity of infrastructure (142,138,122);
**characterised in that** the receiver (210) of the remote terminal (112) is adapted to receive the signal including the encrypted identity data and the processor (360) of the at least one remote terminal (112) is adapted to decrypt the encrypted identity data and to determine from the decrypted data that the serving terminal is a valid serving terminal and/or the infrastructure in which the serving terminal is included is a valid infrastructure.

13. A terminal (112) according to claim 12 which is adapted to determine that signals received from a transmitting terminal which do not include encrypted data giving the identity of the transmitting terminal are not from a valid serving terminal.

14. A terminal (112) according to claim 13 which is adapted, when it determines that a signal received from a transmitting terminal is not from is not a valid serving terminal, not to communicate further with the transmitting terminal.

15. A terminal (112) according to claim 14 which is adapted to undertake a cell re-selection procedure wherein the signals from candidate serving terminals (122, 124) are measured to select one or more preferred serving terminals, wherein only one or more terminals (122) transmitting a signal including encrypted identity data decrypted by the receiving terminal (112) to identify the transmitting terminal (122) as a valid serving terminal are selected as preferred serving terminals.

16. A terminal (112) according to claim 15 which is adapted to produce a list in preference order of the valid serving terminals.

17. A terminal (112) according to any one of claims 12 to 16 and which comprises a mobile station and wherein the or each serving terminal (122, 124) comprises a base transceiver station and the mobile station and the at least one base transceiver station are capable of radio communication with one another.

18. A method (300) for obtaining signals including network identification data on a wireless communication system according to any one of claims 1 to 9, the method comprising the steps of:
transmitting by the serving wireless communication terminal (122) a signal including network identification data;
receiving the signal including the network identification data at the remote communication terminal (112); and **characterised by**
encrypting the network identification data (330) at the wireless serving communication unit (122);
receiving the signal including the encrypted network identification data at the remote communication terminal (112); and
decrypting the encrypted network identification data at the remote communication terminal (112) to determine that the serving wireless communication terminal (122) is a valid serving wireless communication terminal and/or the infrastructure ((142, 138, 122) in which the serving terminal (122) is included is a valid infrastructure.

## Patentansprüche

1. Drahtloses Kommunikationssystem (100), das umfasst:
eine Systeminfrastruktur (142, 138, 122), die mindestens ein versorgendes drahtloses Kommunikationsendgerät (122) umfasst;
und eine Mehrzahl von entfernten drahtlosen Kommunikationsendgeräten (112, 114);
wobei das mindestens eine versorgende Endgerät (122) adaptiert ist, um eine Mehrzahl der entfernten Endgeräte (112, 114) mit einer Kommunikationsressource zu versorgen, wobei das mindestens eine drahtlose versorgende Kommunikationsendgerät (122) umfasst:
einen Sender (220) zum Übertragen von Signalen zu mindestens einem der Mehrzahl von entfernten Endgeräten; und
einen an den Sender (220) gekoppelten Prozessor (320), der adaptiert ist, um zum Einschluss in einem durch den Sender (220) übertragenen Signal, Identitätsdaten zu erzeugen, die die Identität des versorgenden Endgerätes (122) und/oder die Identität einer Infrastruktur (142, 138, 122), in die es eingeschlossen ist, geben;
und mindestens eines der entfernten Kommunikationsendgeräte (112), das umfasst:
einen Empfänger (210) zum Empfangen von Signalen, die von dem mindestens einen versorgenden drahtlosen Kommunikationsendgerät (122) übertragen werden, und
einen an den Empfänger (210) (220) gekoppelten Prozessor (360), der adaptiert ist, um die Identitätsdaten zu erhalten, die die Identität des versorgenden Endgerätes (122) und/oder die Identität einer Infrastruktur (142, 138, 122) geben;
**dadurch gekennzeichnet, dass** der Prozessor (320) des mindestens einen versorgenden Endgerätes adaptiert ist, um die Identitätsdaten in einer verschlüsselten Form (340) zu erzeugen, und der Sender adaptiert ist, um ein Signal zu übertragen, das die verschlüsselten Identitätsdaten enthält; der Empfänger (210) des entfernten Endgerätes (112) adaptiert ist, um das Signal zu empfangen, das die verschlüsselten Identitätsdaten enthält, und der Prozessor (360) des mindestens einen entfernten Endgerätes (112) adaptiert ist, um die verschlüsselten Identitätsdaten zu entschlüsseln und von den entschlüsselten Daten zu bestimmen, dass das versorgende Endgerät ein gültiges versorgendes Endgerät ist und/oder die Infrastruktur, in die das versorgende Endgerät eingeschlossen ist, eine gültige Infrastruktur ist.

2. System (100) gemäß Anspruch 1, wobei das mindestens eine entfernte Endgerät (112) adaptiert ist, um zu bestimmen, dass ein von einem übertragenden Endgerät empfangenes Signal, das keine verschlüsselte Daten enthält, die die Identität des übertragenden Endgerätes geben, nicht von einem gültigen versorgenden Endgerät ist.

3. System (100) gemäß Anspruch 2, wobei das mindestens eine entfernte Endgerät (112) adaptiert ist, um, wenn es bestimmt, dass das von dem übertragenden Endgerät empfangene Signal nicht von einem gültigen versorgenden Endgerät ist, nicht weiter mit dem übertragenden Endgerät zu kommunizieren.

4. System (100) gemäß einem der vorangehenden Ansprüche, wobei das oder jedes versorgende Endgerät (122) eine Basistransceiverstation umfasst und das oder jedes entfernte Kommunikationsendgerät (112) eine Mobilstation umfasst und die Basistransceiverstation und die Mobilstation adaptiert sind, um eine wechselseitige Funkkommunikation zur Verfügung zu stellen.

5. System (100) gemäß einem der vorangehenden Ansprüche, wobei die Prozessoren (320, 360) des mindestens einen versorgenden Endgerätes und des mindestens einen entfernten Endgerätes unter Betriebsbedingungen kryptographische Daten (310, 350) durch eine kryptographische Funktion (240, 370) empfangen, um die Identifizierungsdaten zu verschlüsseln oder zu entschlüsseln.

6. System (100) gemäß Anspruch 5, wobei die kryptographischen Daten (310) Schlüsselinformationen zur Verwendung in einem kryptographischen Algorithmus, der durch den Prozessor (320) ausgeführt wird, enthalten.

7. System (100) gemäß Anspruch 6, wobei der kryptographische Algorithmus für eine besondere Verwendung angepasst worden ist oder auf einem Verschlüsselungsstandard basiert.

8. System (100) gemäß Anspruch 6 oder Anspruch 7, wobei der kryptographische Algorithmus unter Betriebsbedingungen dynamisch erzeugt wird.

9. System (100) gemäß Anspruch 8, wobei der kryptographische Algorithmus unter Betriebsbedingungen dynamisch erzeugt wird, unter Verwendung von zumindest einem der folgenden Aufzählungspunkte:
(i) einer Mehrzahl bestimmter Zeitschlitze oder Zeitrahmen oder Multi-Rahmen oder Hyper-Rahmen, die mit einer Übertragung auf dem drahtlosen Kommunikationssystem verknüpft sind;
(ii) einer bestimmten Codeidentifizierung;
(iii) geographischen Standortinformationen.

10. Drahtloses versorgendes Kommunikationsendgerät (122), das adaptiert ist, um eine Mehrzahl von entfernten Endgeräten (112, 114) in einem System (100) gemäß einem der vorangehenden Ansprüche mit einer Kommunikationsressource zu versorgen, wobei das drahtlose versorgende Kommunikationsendgerät (122) umfasst:
einen Sender (220) zum Übertragen von Signalen zu mindestens einem der Mehrzahl von entfernten Endgeräten; und
einen an den Sender (220) gekoppelten Prozessor (320), der adaptiert ist, um zum Einschluss in einem durch den Sender (220) übertragenen Signal, Identitätsdaten zu erzeugen, die die Identität des versorgenden Endgerätes (122) und/oder die Identität einer Infrastruktur (142, 138, 122), in die es eingeschlossen ist, geben; und **dadurch gekennzeichnet, dass** der Prozessor adaptiert ist, um die Identitätsdaten in einer verschlüsselten Form (340) zu erzeugen, und der Sender (220) adaptiert ist, um ein Signal zu übertragen, das die verschlüsselten Identitätsdaten enthält.

11. Versorgendes Endgerät (122) gemäß Anspruch 10, das eine Basistransceiverstation umfasst, wobei das mindestens eine entfernte Kommunikationsendgerät (112) eine Mobilstation umfasst und die Basistransceiverstation und das entfernte Endgerät in der Lage sind, miteinander eine Funkkommunikation durchzuführen.

12. Drahtloses Kommunikationsendgerät (112) zur Verwendung als ein entferntes Endgerät in einem System (100) gemäß einem der Ansprüche 1 bis 9, das umfasst:
einen Empfänger (210) zum Empfangen von Signalen, die von dem mindestens einen versorgenden drahtlosen Kommunikationsendgerät (122) übertragen werden, und
einen an den Empfänger (210) gekoppelten Prozessor (360), der adaptiert ist, um von einem empfangenen Signal die Identitätsdaten zu erhalten, die die Identität des versorgenden Endgerätes (122) und/oder die Identität einer Infrastruktur (142, 138, 122) geben;
**dadurch gekennzeichnet, dass** der Empfänger (210) des entfernten Endgerätes (112) adaptiert ist, um das Signal zu empfangen, das die verschlüsselten Identitätsdaten enthält, und der Prozessor (360) des mindestens einen entfernten Endgerätes (112) adaptiert ist, um die verschlüsselten Identitätsdaten zu entschlüsseln und aus den entschlüsselten Daten zu bestimmen, dass das versorgende Endgerät ein gültiges versorgendes Endgerät ist und/oder die Infrastruktur, in die das versorgende Endgerät eingefügt ist, eine gültige Infrastruktur ist.

13. Endgerät (112) gemäß Anspruch 12, das adaptiert ist, um zu bestimmen, dass von einem übertragenden Endgerät empfangene Signale, die keine verschlüsselten Daten enthalten, die die Identität des übertragenden Endgerätes geben, nicht von einem gültigen versorgenden Endgerät sind.

14. Endgerät (112) gemäß Anspruch 13, das adaptiert ist, um, wenn es bestimmt, dass ein von einem übertragenden Endgerät empfangenes Signal nicht von einem gültigen versorgenden Endgerät ist, nicht weiter mit dem übertragenden Endgerät zu kommunizieren.

15. Endgerät (112) gemäß Anspruch 14, das adaptiert ist, um ein Zellenneuauswahlverfahren durchzuführen, wobei die Signale von in Frage kommenden versorgenden Endgeräten (122, 124) gemessen werden, um ein oder mehrere bevorzugte Endgeräte auszuwählen, wobei nur ein oder mehrere Endgeräte (122), die ein Signal übertragen, das verschlüsselte Identitätsdaten enthält, die durch das empfangende Endgerät (112) entschlüsselt werden, um das übertragende Endgerät (122) als ein gültiges versorgendes Endgerät zu identifizieren, als bevorzugte versorgende Endgeräte ausgewählt werden.

16. Endgerät (112) gemäß Anspruch 15, das adaptiert ist, um eine Liste der gültigen versorgenden Endgeräte in einer Vorzugsreihenfolge zu erzeugen.

17. Endgerät (112) gemäß einem der Ansprüche 12 bis 16, das eine Mobilstation umfasst, wobei das oder jedes versorgende Endgerät (122, 124) eine Basistransceiverstation umfasst und die Mobilstation und die mindestens eine Basistransceiverstation in der Lage sind, miteinander eine Funkkommunikation durchzuführen.

18. Verfahren (300) zum Erhalten von Signalen, die Netzwerkidentifizierungsdaten enthalten, in einem drahtlosen Kommunikationssystem gemäß einem der Ansprüche 1 bis 9, wobei das Verfahren die folgenden Schritte umfasst:
Übertragen, durch das versorgende drahtlose Kommunikationsendgerät (122), eines Signals, das Netzwerkidentifizierungsdaten enthält;
Empfangen des Signals, das die Netzwerkidentifizierungsdaten enthält, bei dem entfernten Kommunikationsendgerät (112); **gekennzeichnet durch**
Entschlüsseln der Netzwerkidentifizierungsdaten (330) bei der drahtlosen versorgenden Kommunikationseinheit (122);
Empfangen des Signals, das die verschlüsselten Netzwerkidentifizierungsdaten enthält, bei dem entfernten Kommunikationsendgerät (112); und
Entschlüsseln der verschlüsselten Netzwerkidentifizierungsdaten bei dem entfernten Kommunikationsendgerät (112), um zu bestimmen, dass das versorgende drahtlose Kommunikationsendgerät (122) ein gültiges versorgendes drahtloses Kommunikationsendgerät ist und/oder die Infrastruktur, (142, 138, 122), in die das versorgende Endgerät (122) eingeschlossen ist, eine gültige Infrastruktur ist.

## Revendications

1. Système de communication sans fil (100) comprenant :
une infrastructure système (142, 138, 122) comprenant au moins un terminal de communication de desserte sans fil (122) ;
et une pluralité de terminaux de communication sans fil distants (112, 114) ;
le ou les terminaux de desserte (122) étant adaptés pour desservir une pluralité des terminaux distants (112, 114) au moyen d'une ressource de communication, le ou les terminaux de communication de desserte sans fil (122) comprenant :
- un émetteur (220) pour transmettre des signaux à destination d'au moins un terminal de la pluralité de terminaux distants ; et
- un processeur (320), couplé à l'émetteur (220), adapté pour produire, afin de les inclure dans un signal transmis par l'émetteur (220), des données d'identité donnant l'identité du terminal de desserte (122) et/ou l'identité de l'infrastructure (142, 138, 122) dans laquelle il est inclus ;
et au moins l'un des terminaux de communication distants (112) comprenant :
- un récepteur (210) pour recevoir des signaux transmis par le ou les terminaux de communication de desserte sans fil (122), et
- un processeur (360), couplé au récepteur (210) (220), adapté pour obtenir les données d'identité donnant l'identité du terminal de desserte (122) et/ou l'identité de l'infrastructure (142, 138, 122) ;
**caractérisé en ce que** le processeur (320) du ou des terminaux de desserte est adapté pour produire les données d'identité sous une forme chiffrée (340), et l'émetteur est adapté pour transmettre un signal comprenant les données d'identité chiffrées ; le récepteur (210) du terminal distant (112) est adapté pour recevoir le signal comprenant les données d'identité chiffrées, et le processeur (360) du ou des terminaux distants (112) est adapté pour déchiffrer les données d'identité chiffrées et pour déterminer à partir des données déchiffrées que le terminal de desserte est un terminal de desserte valide et/ou que l'infrastructure dans laquelle le terminal de desserte est inclus est une infrastructure valide.

2. Système (100) selon la revendication 1, et dans lequel le ou les terminaux distants (112) sont adaptés pour déterminer qu'un signal reçu d'un terminal émetteur qui ne comprend pas de données chiffrées donnant l'identité du terminal émetteur ne provient pas d'un terminal de desserte valide.

3. Système (100) selon la revendication 2, dans lequel le ou les terminaux distants (112) sont adaptés, lorsqu'ils déterminent que le signal reçu du terminal émetteur ne provient pas d'un terminal de desserte valide, pour ne pas communiquer davantage avec le terminal émetteur.

4. Système (100) selon l'une quelconque des revendications précédentes, dans lequel le ou chaque terminal de desserte (122) constitue une station émettrice-réceptrice de base et le ou chaque terminal de communication distant (112) constitue une station mobile, et la station émettrice-réceptrice de base et la station mobile sont adaptées pour communiquer entre elles par liaison hertzienne.

5. Système (100) selon l'une quelconque des revendications précédentes, dans lequel les processeurs (320, 360) du ou des terminaux de desserte et du ou des terminaux distants en cours de fonctionnement reçoivent des données cryptographiques (310, 350) d'une fonction cryptographique (240, 370) afin de chiffrer ou déchiffrer les données d'identification.

6. Système (100) selon la revendication 5, dans lequel les données cryptographiques (310) comprennent des informations de clés à utiliser dans un algorithme de cryptographie exécuté par le processeur (320).

7. Système (100) selon la revendication 6, dans lequel l'algorithme de cryptographie a été personnalisé pour un usage particulier, ou est fondé sur une norme de chiffrement.

8. Système (100) selon la revendication 6 ou la revendication 7, et dans lequel l'algorithme de cryptographie est généré de façon dynamique en cours de fonctionnement.

9. Système (100) selon la revendication 8, et dans lequel l'algorithme de cryptographie est généré de façon dynamique en cours de fonctionnement, au moyen d'un ou plusieurs des éléments suivants :
(i) une pluralité de tranches ou trames ou multitrames ou hypertrames temporelles particulières, associées à une transmission dans ledit système de communication sans fil ;
(ii) une identification par code particulière ;
(iii) des informations de géolocalisation.

10. Terminal de communication de desserte sans fil (122) adapté pour desservir une pluralité de terminaux distants (112, 114) au moyen d'une ressource de communication, dans un système (100) selon l'une quelconque des revendications précédentes, le terminal de communication de desserte sans fil (122) comprenant :
un émetteur (220) pour transmettre des signaux à destination d'au moins un terminal de la pluralité de terminaux distants ; et
un processeur (320), couplé à l'émetteur (220), adapté pour produire, afin de les inclure dans un signal transmis par l'émetteur (220), des données d'identité donnant l'identité du terminal de desserte (122) et/ou l'identité de l'infrastructure (142, 138, 122) dans laquelle il est inclus ; et
**caractérisé en ce que** le processeur est adapté pour produire les données d'identité sous une forme chiffrée (340), et l'émetteur (220) est adapté pour transmettre un signal comprenant les données d'identité chiffrées.

11. Terminal de desserte (122) selon la revendication 10, et qui constitue une station émettrice-réceptrice de base, et dans lequel le ou chaque terminal de communication distant (112) constitue une station mobile, et la station émettrice-réceptrice de base et la station mobile sont capables communiquer entre elles par liaison hertzienne.

12. Terminal de communication sans fil (112) à utiliser en tant que terminal distant dans un système (100) selon l'une quelconque des revendications 1 à 9, et comprenant :
un récepteur (210) pour recevoir des signaux transmis par le ou les terminaux de communication de desserte sans fil (122), et
un processeur (360), couplé à l'émetteur (210), adapté pour obtenir d'un signal reçu les données d'identité donnant l'identité du terminal de desserte (122) et/ou l'identité de l'infrastructure (142, 138, 122) ;
**caractérisé en ce que** le récepteur (210) du terminal distant (112) est adapté pour recevoir le signal comprenant les données d'identité chiffrées, et le processeur (360) du ou des terminaux distants (112) est adapté pour déchiffrer les données d'identité chiffrées et pour déterminer à partir des données déchiffrées que le terminal de desserte est un terminal de desserte valide et/ou que l'infrastructure dans laquelle le terminal de desserte est inclus est une infrastructure valide.

13. Terminal (112) selon la revendication 12, qui est adapté pour déterminer que les signaux reçus d'un terminal émetteur qui ne comprennent pas de données chiffrées donnant l'identité du terminal émetteur ne proviennent pas d'un terminal de desserte valide.

14. Terminal (112) selon la revendication 13, qui est adapté, lorsqu'il détermine qu'un signal reçu d'un terminal émetteur ne provient pas d'un terminal de desserte valide, pour ne pas communiquer davantage avec le terminal émetteur.

15. Terminal (112) selon la revendication 14, qui est adapté pour exécuter une procédure de resélection de cellule, dans laquelle les signaux provenant de terminaux de desserte candidats (122, 124) sont mesurés pour sélectionner un ou plusieurs terminaux de desserte préférés, où seuls celui ou ceux des terminaux (122) qui émettent un signal comprenant des données d'identité chiffrées déchiffrées par le terminal récepteur (112) pour identifier le terminal émetteur (122) en tant que terminal de desserte valide sont sélectionnés en tant que terminaux de desserte préférés.

16. Terminal (112) selon la revendication 15, qui est adapté pour produire une liste de terminaux de desserte valide selon un ordre de préférence.

17. Terminal (112) selon l'une quelconque des revendications 12 à 16, et qui constitue une station mobile, et dans lequel le ou chaque terminal de desserte (122, 124) constitue une station émettrice-réceptrice de base, et la station mobile et la ou les stations émettrices-réceptrices de base sont capables de communiquer entre elles par liaison hertzienne.

18. Procédé (300) pour obtenir des signaux comprenant des données d'identification de réseau dans un système de communication sans fil selon l'une quelconque des revendications 1 à 9, le procédé comprenant les étapes de :
transmission par le terminal de communication de desserte sans fil (122) d'un signal comprenant des données d'identification de réseau ;
réception du signal comprenant les données d'identification de réseau par le terminal de communication distant (112) ; et **caractérisé par** les étapes de :
chiffrement des données d'identification de réseau (330) dans l'unité de communication de desserte sans fil (122) ;
réception du signal comprenant les données d'identification de réseau chiffrées par le terminal de communication distant (112) ; et
déchiffrement des données d'identification de réseau chiffrées par le terminal de communication distant (112) pour déterminer que le terminal de communication de desserte sans fil (122) est un terminal de communication de desserte sans fil valide et/ou que l'infrastructure (142, 138, 122) dans laquelle le terminal de desserte (122) est inclus est une infrastructure valide.
